Europäisches Patentamt

European Patent Office

Office européen des brevets

(11) Veröffentlichungsnummer: **0 250 756**
B1

(12) **EUROPÄISCHE PATENTSCHRIFT**

(45) Veröffentlichungstag der Patentschrift:
14.03.90

(21) Anmeldenummer: 87106077.8

(22) Anmeldetag: 27.04.87

(51) Int. Cl.⁴: **B32B 27/04**, B32B 25/10, C08K 7/02

(54) **Bauteile aus faserförmigen Festigkeitsträgern und Gummi und Verfahren zu ihrer Herstellung.**

(30) Priorität: **13.05.86 DE 3615965**

(43) Veröffentlichungstag der Anmeldung:
**07.01.88 Patentblatt 88/1**

(45) Bekanntmachung des Hinweises auf die Patenterteilung:
**14.03.90 Patentblatt 90/11**

(84) Benannte Vertragsstaaten:
**AT BE CH DE ES FR GB IT LI NL SE**

(56) Entgegenhaltungen:
**DE-A- 1 595 558**
**DE-A- 3 602 705**

**PATENT ABSTRACTS OF JAPAN, unexamined applications, C Field, Vol. 9, Nr 260, 17. Oktober 1985, THE PATENT OFFICE JAPANESE GOVERNMENT**

(73) Patentinhaber: **HÜLS AKTIENGESELLSCHAFT, Patentabteilung / PB 15 - Postfach 13 20, D-4370 Marl 1(DE)**

(72) Erfinder: **Jadamus, Hans, Dr., Hervester Strasse 8, D-4370 Marl(DE)**
Erfinder: **Richter, Klaus-Peter, Dr., Erlbrüggestrasse 38, D-4370 Marl(DE)**

## Beschreibung

Die Erfindung betrifft Bauteile aus mindestens zwei fest miteinander verbundenen Lagen A und B, von denen die eine aus einem faserförmigen Festigkeitsträger und einem thermoplastischen Kunststoff und die andere aus Gummi besteht, sowie Verfahren zur Herstellung solcher Bauteile.

Bekanntlich kann ein einziger Werkstoff nicht immer alle Eigenschaften beitragen, die von einem Gegenstand verlangt werden. Nicht vereinbar sind z. B. hohe Festigkeit, Steifheit oder Härte einerseits und gute Schwingungsdämpfung, Schmiegsamkeit oder Rutschfestigkeit andererseits. Soll ein Körper diese Eigenschaften vereinen, dann verwendet man Verbunde aus mehreren Werkstoffen.

Es bietet sich an, in diesem Fall Metall und Gummi zu verwenden.

Eine solche Kombination weist jedoch zwei erhebliche Nachteile auf:

1. Metalle haben eine hohe Dichte, d. h. die daraus hergestellten Bauteile sind schwer.

2. Metall und Gummi verbinden sich nicht ohne weiteres. Die Ausrüstung des Metalles mit einem Haftvermittler ist umständlich.

Aus dem Stand der Technik sind Verbunde zwischen Kautschuk und Glas- oder Aramidfasern bekannt (vgl. W. Kleemann "Mischungen für die Elastverarbeitung", VEB, Deutscher Verlag für Grundstoffindustrie, Leipzig, 1982, Kapitel 20, S. 296 ff). Diese Systeme lassen es jedoch nicht zu, steife Platten oder andere beliebig geformte, steife Körper herzustellen.

Es ist auch bekannt, daß man Glasfasern mit Gamma-Aminopropyltrimethoxysilan behandeln und anschließend in Duroplasten, wie z. B. Formaldehyd-Resorcinol-Copolymere oder Polyurethane, einschließen kann. Im letzten Schritt kann dann, beispielsweise unter Verwendung von Vinylpyridincopolymeren, ein Verbund mit Kautschuken erzielt werden. Duroplasten sind nach einmaliger Aushärtung nicht mehr verformbar. Für viele Anwendungszwecke ist eine solche Einschränkung jedoch unbefriedigend.

Ziel der vorliegenden Erfindung war es daher, Verbundkörper zu schaffen, die aus einem Fasern enthaltenden, thermoplastischen Festigkeitsträger und Gummi bestehen.

Kohlenstoffaserverstärkte Thermoplaste werden z.B. in dem Buch «Developments in Reinforced Plastics-4», Elsevier Applied Science Publishers, 1984, von Paul E. McMahon beschrieben. Man erkennt, daß die dort beschriebenen Systeme den oben genannten Anforderungen entsprechen würden, wenn der verstärkte Thermoplast mit Kautschuk eine feste Verbindung einginge. Die Überprüfung zeigt, daß dies nicht der Fall ist. Der vulkanisierte Kautschuk läßt sich mit geringer Kraft, d.h. weniger als 0,7 N/mm im Falle eines Verbundes Kohlenstoffaser/Polyetheretherketon/E-SBR-Kautschuk, an der Grenzfläche von Thermoplasten abziehen. Nach dem Stand der Technik ist es also nicht möglich, Bauteile aus Thermoplasten und Festigkeitsträgern einerseits und Kautschuk andererseits auf einfache Weise herzustellen. Es wurde nun gefunden, daß die gesuchten Eigenschaftskombinationen in Bauteilen zu verwirklichen sind, die aus zwei Lagen A und B aufgebaut sind.

Die feste Lage A besteht aus ungeschnittenen, Kohlenstoff-(C-)-, Aramid- und/oder Glasfasern, die mit dem Polyphenylenether (PPE) enthaltenden Thermoplasten beschichtet sind. Der Thermoplast kann entweder eine dünne Beschichtung darstellen oder die Form einer Matrix haben, in die Fasern eingelagert sind.

Die Lage B besteht aus Gummi, der durch Vulkanisation bestimmter Doppelbindungen enthaltender Kautschuke erhalten wird.

Gegenstand der vorliegenden Erfindung sind ferner Verfahren zur Herstellung dieser Bauteile nach den Ansprüchen 2 bis 6.

Zwar war aus der Art. 54(3) EPÜ entsprechenden nicht vorveröffentlichten europäischen Patentanmeldung EP-A-0 196 407 ein «Verfahren zur Herstellung eines chemischen Verbundes zwischen Formmassen auf Basis von Polyphenylenethern einerseits und Doppelbindungen enthaltenden, mit Schwefel vulkanisierbaren Kautschuken andererseits» bekannt, aber in dieser Anmeldung findet sich kein Hinweis, daß man derartige Fasern verwenden kann. Außerdem ist es wichtig, daß die Fasern ungeschnitten sind, während ganz überwiegend für Thermoplasten geschnittene Fasern verwendet werden. Schließlich ist der Anteil der Fasern auch keineswegs auf 50% begrenzt.

Der Thermoplast der Lage A enthält als wichtigsten Bestandteil Polyphenylenether, daneben kann er Fließhilfsmittel und sonstige Zusatzmittel enthalten.

Als Polyphenylenether kommen in erster Linie Polyether auf Basis von 2,6-Dimethylphenol in Frage, wobei der Ethersauerstoff der einen Einheit an den Benzolkern der benachbarten Einheit gebunden ist. Dabei sollen mindestens 50 Einheiten miteinander verknüpft sein.

Grundsätzlich kommen auch andere o,o'-Dialkylphenole in Frage, deren Alkylrest vorzugsweise höchstens 6 C-Atome besitzt, sofern sichergestellt ist, daß dieser kein alpha-ständiges tertiäres C-Atom aufweist. Ferner eignen sich Phenole, die lediglich in einer ortho-Stellung durch einen tertiären Alkylrest, insbesondere einen tertiären Butylrest, substituiert sind. Jeder der aufgeführten monomeren Phenole kann in 3-Stellung, gegebenenfalls auch in 5-Stellung, durch eine Methylgruppe substituiert sein. Selbstverständlich können auch Gemische der hier erwähnten monomeren Phenole eingesetzt werden. Die Polyphenylenether können z.B. in Gegenwart von komplexbildenden Mitteln, wie Kupferbromid und Morpholin, aus den Phenolen hergestellt werden (vgl. DE.OSS 3 224 692 und 3 224 691). Die Viskositätszahl J, bestimmt nach DIN 53 728 in Chloroform bei 25°C, liegt im Bereich von 25 bis 90 cm³/g. Bevorzugt ist das Polymere des 2,6-Dimethylphenols, der Poly-(2,6-dimethyl-1,4-phenylen-ether).

Als Fließhilfsmittel können dem PPE niedermolekulare Verbindungen wie Esterweichmacher oder Aromaten, die sich im PPE lösen, in Mengen bis zu 50%, vorzugsweise bis 20%, zugesetzt werden.

Als Esterweichmacher kommen in Frage
- organische Ester der phosphorigen Säure,
- organische Ester der Phosphorsäure,
- Phtalsäureester, deren Alkoholreste bis zu 15 C-Atome aufweisen können,
- Ester von aliphatischen oder aromatischen Dicarbonsäuren mit aliphatischen oder aliphatisch-aromatischen Alkoholen,
- Oligoester der soeben genannten Säuren mit Diolen, wobei deren Anteil maximal 20%, bezogen auf die Menge der monomeren Ester, beträgt.

Als Aromaten kommen Verbindungen in Frage, die bis zu 5 aromatische Ringe und gegebenenfalls funktionelle Gruppen enthalten können. Beispielhaft seien Benzyltoluol, Dibenzyltoluol, Toluol und Xylol erwähnt.

Sonstige Zusatzmittel umfassen polymere Zusätze, wie z.B. bekannte Schlagzähmacher für PPE. Erwähnt seien in diesem Zusammenhang Polyoctenylene, Styrol-Butadien-Styrol-Blockcopolymere sowie schlagzäh modifizierte Styrolpolymerisate. Auch Homopolystyrolpolymerisate können zugesetzt werden. Jedoch wird in der Regel der gewünschte Verbund durch derartige Zusätze nicht verbessert. Daher liegt der Anteil dieser Zusatzmittel vorzugsweise unter 20%.

Der faserförmige Festigkeitsträger besteht aus ungeschnittenen Kohlenstoff-, Aramid- und/oder Glasfasern. Die Fasern können beispielsweise in Form von Garnen, Geweben, Matten, Vliesen, Rovings oder als einzelne Fasern vorliegen. Die Glasfasern werden vom Hersteller üblicherweise mit einer Schlichte behandelt.

Gestalt und Ausdehnung der im Bauteil verbundenen Lagen können stark variieren. Sie können praktisch gleich sein wie z. B. in Sandwichstrukturen oder ungleich wie z. B. in großflächigen Gummimatten mit verstärkten Randzonen oder in großflächigen steifen Teilen mit Gummifüßen. Entscheidend sind also nicht die Ausmaße und Formen der Lagen A und B; entscheidend ist allein, daß Lage A und B durch eine gemeinsame, möglicherweise unterbrochene Fläche miteinander verbunden sind. Die Bauteile müssen aus mindestens 2 Lagen A und B bestehen. Es können aber auch 3 oder mehr Lagen mit vorzugsweise abwechselnder Reihenfolge ABAB... oder BABA... sein. Das Beispiel 1 beschreibt z. B. Verbundplatten aus Kautschuk einerseits und einem Kohlenstoffasern umhüllenden, PPE-haltigen Thermoplasten andererseits.

Steifigkeit und Festigkeit der Lage A werden durch Art, Ausrichtung und Anteil der faserförmigen Festigkeitsträger und durch die Zusammensetzung der Matrix bestimmt.

Als Komponente B kommen folgende Doppelbindungen enthaltende, mit Schwefel vulkanisierbare Kautschuke in Betracht, die bereits in der deutschen Patentanmeldung P 36 02 705.7 aufgeführt sind:

1. Styrol-Butadien-Kautschuke

Es kann sich dabei sowohl um E- als auch um L-SBR-Kautschuke mit einem Styrolanteil zwischen 18 und 40 Gewichtsprozent handeln. Auch ölgestreckte SBR-Kautschuke sind geeignet. Der Kautschuk kann in Ballenform vorliegen. Für die Verarbeitung ist es jedoch ökonomischer, von einem pulverförmigen, füllstoffhaltigen Kautschuk auszugehen.

E-SBR-Kautschuk wird in bekannter Weise durch Polymerisation von 15 bis 40 Gewichtsprozent Styrol und entsprechend 85 bis 60 % Butadien in Emulsion hergestellt. Ein solcher Kautschuk wird beispielsweise in der Werkzeitschrift BUNA^R EM Nr. 601 der Bunawerke Hüls GmbH, Ausgabe September 1982, beschrieben. Seine Mooney-Viskosität $ML_{(1+4)}$, 100 °C, liegt zwischen 30 und 120 (vgl. Mooney, Rubber Chem. Techn. 30, 460 (1957).

Die covulkanisierbaren Kautschukmischungen enthalten stets Füllstoffe wie Ruß oder Kieselsäure, Verstreckungsmittel wie z. B. Mineralöle, Vulkanisationsmittel wie Schwefel, Vulkanisationsbeschleuniger und Alterungsschutzmittel. Ein besonders geeignetes Verarbeitungshilfs-mittel ist Polyoctenylen (A. Dräxler, Kautschuk + Gummi, Kunststoffe 1983, S. 1037 bis 1043).

Die zugesetzten Mineralöle können paraffinisch, naphthenisch oder aromatisch sein.

2. Butadien-Kautschuke

Geeignet sind BR-Kautschuke unabhängig davon, ob sie mit Li- oder Co-Katalysatoren hergestellt wurden. Auch der Anteil des cis-1,4-Isomeren hat keinen Einfluß auf die Eignung dieses Kautschuktyps. Der Einsatz von Polyoctenylen als Verarbeitungshilfsmittel ist auch hier vorteilhaft.

### 3. Isopren-Kautschuke

Geeignet sind synthetische IR-Kautschuke, unabhängig davon, ob sie mit Ti- oder Li-Katalysatoren hergestellt wurden. Naturkautschuk ist nur als Mischungskomponente geeignet. Auch 3,4-IR kann verwendet werden. Somit hat der cis-1,4/trans-1,4 - bzw. 1,2- und 3,4-Gehalt keinen Einfluß auf die Haftungseigenschaften.

### 4. Isobuten-Isopren-Kautschuke

Weiterhin sind IIR-Kautschuke unmittelbar geeignet. Halogenierte Varianten bedürfen weiterer Mischungskomponenten.

### 5. Mischungen folgender Kautschuktypen untereinander:
SBR, BR, IR und IIR

Diese Mischungen sind vorzugsweise 2- oder 3-komponentig. Mit Mischungen unterschiedlicher Gewichtsanteile SBR- und BR-Kautschuk werden besonders gute Ergebnisse erzielt.

### 6. Kautschukmischungen, die NR-, CR-, NBR- und/oder CIIR-Kautschuk enthalten

Es handelt sich um Mischungen der Kautschukkomponenten 1 bis 5 mit den aufgeführten Kautschuktypen, wobei der Anteil der letzteren insgesamt bis zu 80 Gewichtsprozent betragen kann.

Für das erfindungsgemäße Verfahren eignen sich insbesondere die Styrol-Butadien-Kautschuke gemäß 1.

Die Herstellung der aufgeführten Kautschuktypen erfolgt nach literaturbekannten Methoden (vgl. W. Hofmann, Kautschuktechnologie, Gentner-Verlag, Stuttgart, 1980).

Die Kautschukoberflächen können beispielsweise entsprechend dem Verfahren der EP-OS 0 141 087 behandelt werden.

Die Herstellung der Bauteile erfolgt grundsätzlich in 2 Stufen. Zunächst wird die Lage A hergestellt und anschließend wird durch Covulkanisation mit dem Kautschuk das Bauteil hergestellt.

Die faserförmigen Festigkeitsträger werden in der ersten Stufe mit einer Lösung des Thermoplasten getränkt. Als Lösungsmittel kommen alle Lösemittel infrage, die Polyphenylenether zu lösen imstande sind, also beispielsweise auch chlorierte Kohlenwasserstoffe. Bevorzugt sind Lösemittel, die sich leicht verdampfen lassen, wie z. B. Toluol, Xylol oder Benzol. Anschließend wird das Lösemittel entfernt. Gleichzeitig oder anschließend erhält die Lage A ihre Form. Dies erfolgt zweckmäßigerweise bei erhöhter Temperatur und gegebenenfalls bei Unter- oder Überdruck.

Im Falle von Rovings umfaßt die Herstellung der Lage A folgende Verfahrensschritte:

1. Stauchen und Tränken mit einer Lösung des Matrixstoffes
2. Verstrecken bis zur Parallellage der Fasern
2a. gegebenenfalls Legen oder Wickeln der getränkten Rovings
3. Trocknen
3a. gegenbenenfalls Wärmebehandlung und Formgebung oberhalb der Erweichungstemperatur, gegebenenfalls unter Druck
4. gegebenenfalls Ummanteln des Festigkeitsträgers mit PPE durch thermoplastische Verarbeitungsverfahren

Es kann in manchen Fällen sinnvoll sein, das Tränken und Entfernen des Lösemittels zu wiederholen. Im Falle von Geweben oder Vliesen kann beispielsweise auch durch Rakeln oder Quetschen für eine homogene Benetzung der Fasern gesorgt werden.

Besonders günstig ist es, wenn man die Lösung des Thermoplasten auf folgende Weise herstellt. Die bei der oxidativen Kupplung von 2,6-Dimethylphenol anfallenden toluolischen Lösungen werden in bekannter Weise von Katalysatorresten befreit, gegebenenfalls mit dem Fließhilfsmittel und sonstigen Zusatzstoffen versetzt und durch Verdünnen oder Eindicken auf die Konzentration gebracht, die für die Tränkung der faserförmigen Festigkeitsträger am günstigsten ist. Man kann natürlich auch solche Lösungen herstellen, indem man festes PPE in Lösemitteln auflöst. Tränklösungen, die eine relativ niedrige PPE-Konzentration, beispielsweise 5 %, aufweisen, sind besonders für die Herstellung von Lagen mit einem hohen Gewichtsanteil von Festigkeitsträgern geeignet. Hochprozentige Lösungen, beispielsweise 50 %ige Lösungen, kommen vor allem für die Herstellung von Lagen mit hohem Gewichtsanteil der Thermoplasten infrage.

Die Fertigung der aus steifen und gummielastischen Lagen zusammengesetzten Bauteile kann auf verschiedene Weise erfolgen.

1. Durch Pressen unter Vulkanisationsbedingungen.
2. Durch Extrusionsbeschichtung von vorbereiteten Rovings oder vorgefertigten steifen Formteilen mit Kautschuk und Covulkanisation.
3. Durch Anspritzen von vorgefertigen steifen Teilen unter Vulkanisationsbedingungen.

Der in den Bauteilen verwendete Kautschuk kann durch bekannte Mittel, z. B. Karkassen, verstärkt sein. Es können weitere Hilfsmittel zur Fertigung der Bauteile verwendet werden, wie z. B. Abstandhalter, Klammern oder Lager aus verstärktem oder unverstärkten PPE, die als verlorene Hilfskonstruktionen einvulkanisiert werden und im Bauteil verbleiben.

Einsatzstoffe C-Faser:
Käufliche Kohlenstoffaser-Rovings E/XA-S 12 K der Firma Hysol Grafil Ltd., Coventry, England

Aramid-Cord:
Käufliches Filamentgarn aus Kevlar® 49 der Fa. Du Pont, CH-1211 Genf 24, Schweiz

Glasfaser:
Käufliches VETROTEX®-Textilglasroving EC-10-9600-P 388 der Fa. Gevetex Textilglas-GmbH, D-5100 Aachen

PPE:
PPE gelöst in Toluol, wie es gemäß DE-A 33 13 864 nach der Reaktionsextraktion vorliegt. Die J-Werte des Polymeren (bestimmt in Chloroform nach DIN 53 728) sind jeweils angegeben.

Schlagzähmacher:

Es wurde ein Polyoctenylen mit einem J-Wert von 120 ml/g und einem trans-Gehalt von 80 % eingesetzt. Ein solches Produkt ist unter dem Namen VESTENAMER® 8012 im Handel erhältlich (Hersteller: HÜLS AG, D-4370 Marl 1). Weitere Kenndaten dieses Produktes sind der Zeitschrift "Kautschuk, Gummi, Kunststoffe" 1981, Seite 185 bis 190, sowie dem hüls-Merkblatt Nr. 2247 "VESTENAMER® 8012" zu entnehmen. Das Polyoctenylen kann beispielsweise auch nach K. J. Ivin "Olefin Metathesis", Academic Press, Seite 236 ff., 1983, und den dort angegebenen weiteren Literaturstellen hergestellt werden.

Fließhilfsmittel:

Triphenylphosphat (TPP)
MARLOTHERM® S (DBT), ein Gemisch isomerer Dibenzyltoluole, Handelsprodukt der HÜLS AG, D-4370 Marl 1

Kautschuke:

Ein rußgefüllter, weichmacherhaltiger E-SBR-Pulverkautschuk wird durch Vermischung folgender Bestandteile hergestellt:

| Gewichtsteile | Stoff |
|---|---|
| 160 | Kautschukpulver, bestehend aus 100 Teilen E-SBR-Kautschuk (Styrolgehalt 23 Gewichtsprozent) und 60 Teilen Ruß (Firmenschrift der HÜLS AKTIENGESELLSCHAFT, Nr. 5214 vom Oktober 1983 "Füllstoffhaltiges Kautschukpulver BUNA$^R$ EM") |
| 1 | Stearinsäure |
| 4 | Zinkoxid |
| 1 | N-Isopropyl-N'-phenyl-p-phenylendiamin |
| 1 | N-(1,3-Dimethylbutyl)-N'-phenyl-p-phenylendiamin |
| 2,5 | eines handelsüblichen Alterungsschutzmittels gegen Licht und Ozon (Antilux$^R$ 111). Es handelt sich um ein paraffinisches Wachs mit breiter Molekulargewichtsverteilung und hohem Molekulargewichsmittel. (Hersteller: Fa. Rhein-Chemie, D-6800 Mannheim). |
| 1,8 | Schwefel |
| 1,3 | N-Cyclohexyl-1-benzothiazolsulfenamid |
| 0,8 | Tetramethylthiuramdisulfid |
| 0,5 | Diphenylguanidin |
| 0,3 | Zinkdiethyldithiocarbamat |
| 40 | eines handelsüblichen aromatischen Mineralölweichmachers |

Die Mischung walzt man innerhalb von 5 Minuten bei 50 °C zu einem 2 mm dicken Fell aus.

Beispiel 1

Herstellung und Eigenschaften von Verbundplatten aus einem C-Faser/PPE-Verbund und Kautschuk

1.1 Vorbehandlung der C-Fasern

Die C-Faser-Rovings werden in einer auf 70 °C erwärmten, 15 %igen toluolischen Lösung von PPE (J-Wert 25 ml/g) getränkt, wobei dafür gesorgt wird, daß die Rovings in der Lösung durch Stauchen aufgebauscht werden, bevor man die Fasern durch Strecken wieder in Parallellage bringt. Die so getränkten Rovings werden in gerader Lage bei 100 °C im Vakuum bis zur Gewichtskonstanz getrocknet. Das Verhältnis C-Faser zu PPE ermittelt man durch Rückwaage.

1.2 Platten aus einem C-Faser/PPE-Verbund

Die behandelten Stränge verlegt man parallel und preßt sie in einem 100 × 100 × 1 mm Preßrahmen bei 300 °C und 200 bar zu Platten.

### 1.3 Verbundplatten mit Kautschuk

An einer Stirnseite belegt man die Platte gemäß 1.2 mit einem 20 mm breiten Streifen Aluminiumfolie, der später als Trennmittel zwischen den covulkanisierten Schichten dient und das Einspannen der einzelnen Schichten in die Versuchsapparatur ermöglicht. Die Platte beschichtet man sodann mit Kautschuk und covulkanisiert die Schichten innerhalb von fünf Minuten bei 180 °C zu einer Verbundplatte von 2 mm Gesamtdicke.

### 1.4 Schälversuch

Man sägt die Verbundplatten in 30 mm breite Streifen in Längsrichtung der Faserorientierung und unterwirft sie einem Schälversuch entsprechend DIN 53 539.

### 1.5 Elastizitätsmodul

An dem durch den Schälversuch vom Kautschuk befreiten Streifen bestimmt man den Elastizitätsmodul in Anlehnung an DIN 53 457 Abschnitt 2.1

### 1.6 Beeinflussung des Verbundes durch Dauerschwingbelastungen

Aus Verbundplatten nach 1.3 fräst man 120 × 18 mm Probekörper mit einer Einschnürung auf 10 mm und unterzieht sie einem Dauerschwingversuch in Anlehnung an DIN 53 442 bei einer Frequenz von 10 Hz und einem Biegewinkel von 15 °.

### 1.7 Ergebnisse

Für Beispiel 1 wurden folgende Eigenschaften ermittelt:

| Verhältnis C-Faser zu Bindemittel | Trennkraft N/mm nach 1.4 | E-Modul N/mm$^2$ | Trennkräfte N/mm nach Dauerschwingversuchen Zahl der Lastenwechsel | | | | |
|---|---|---|---|---|---|---|---|
| | | | 0 | $2.10^6$ | $4.10^6$ | $6.10^6$ | $8.10^6$ |
| 66:34 | 4,3 | 190000 | 3,0 | 3,0 | 4,8 | 4,1 | 4,4 |

Beispiel 2 bis 9, Vergleichsbeispiele A bis C

Zusammensetzung und experimentelle Prüfdaten sind der Tabelle 2 zu entnehmen.
Die Platten und Kautschukverbunde werden analog zu Beispiel 1 hergestellt und einem Schälversuch entsprechend DIN 53 539 unterworfen. Im Falle der Vergleichsversuche wurden die Fasern nicht mit der Lösung eines Thermoplasten behandelt.

Beispiele 10 bis 15, Vergleichsbeispiele D bis F

Als Tränkmittel zur Behandlung der Rovings und des Cords verwendet man Lösungen von

I 15 % PPE vom J-Wert 45 ml/g
oder
II 15 % PPE vom J-Wert 45 ml/g
1,5 % VESTENAMER$^R$ 8012
1,5 % Triphenylphosphat

in Toluol.
Die Festigkeitsträger behandelt man mit dem Tränkmittel, wie im Beispiel 1 beschrieben, trocknet sie und bestimmt ihre Haftfestigkeit am Kautschuk, der innerhalb von 5 Minuten bei 180 °C vulkanisiert wurde. Das Verfahren entspricht dem Standard ISO/DIS 4679 vom 07.12.1979 (Mittelwerte aus 12 Einzelbestimmungen, H-Test).

Tabelle 1

| Beispiel-Nr. | Festigkeitsträger | Tränkmittel | Haftfestigkeit N |
|---|---|---|---|
| D | C-Faser Roving | – | 31 |
| 10 | C-Faser Roving | I | 71 |
| 11 | C-Faser Roving | II | 79 |
| E | Aramid-Cord | – | 35 |
| 12 | Aramid-Cord | I | 47 |
| 13 | Aramid-Cord | II | 55 |
| F | Glasfaser-Roving | – | 26 |
| 14 | Glasfaser-Roving | I | 52 |
| 15 | Glasfaser-Roving | II | 62 |

Die Bauteile können in vielfältiger Weise zum Einsatz kommen. Bei unidirektionaler Ausrichtung der Festigkeitsträger kommen vor allem Flankenschutzelemente für den Automobilsektor wie Seitenstreifen, Türaufsatzteile, Einstiegschienen, Schwellerverkleidungen in Betracht. Ein weiteres Einsatzgebiet sind Förderbänder oder luftgefüllte Reifen, wobei die Flächen auf übliche Weise durch Karkassen verstärkt sein können.

Einsatzgebiete, in denen Festigkeitsträger orthotrop oder quasi-isotrop ausgerichtet sind, betreffen rutschfeste Platinen, Türen und Klappen mit Dichtungslippen.

Für Leichtpanzerungen kommen Vielfach-Sandwich-Strukturen aus sehr dünnen Schichten von Festigkeitsträgern und Kautschuk mit vorzugsweise quasiisotroper Ausrichtung der Festigkeitsträger zum Einsatz.

Die Ergebnisse der Vergleichsversuche zeigen, daß die Haftfestigkeitswerte zurückgehen, wenn man einen Verbund zwischen Fasern und Kautschuk ohne Thermoplasten herstellen will.

Tabelle 2

| Beispiel-Nr. | Festigkeitsträger | J-Wert des PPE ml/g | Bestandteile des Thermoplasten im Tränkbad | Masseverhältnis Festigkeitsträger: Thermoplast | Trenn-kraft N/mm |
|---|---|---|---|---|---|
| A | C-Faser | – | – | – | 0,4 |
| 1 | C-Faser | 25 | PPE 15*) | 66:34 | 4,3 |
| 2 | C-Faser | 59 | PPE 15 | 62:38 | 9,2 |
| 3 | C-Faser | 83 | PPE 15 | 57:43 | 8,5 |
| 4 | C-Faser | 59 | PPE:TPP=15:1,5*) | 52:48 | 8,0 |
| 5 | C-Faser | 59 | PPE:TOR:DBT=15:1,5:1,5 | 54:46 | 6,3 |
| B | Aramid-Cord | – | – | – | 0,67 |
| 6 | Aramid-Cord | 59 | PPE 15 | 48:52 | 6,7 |
| 7 | Aramid-Cord | 59 | PPE:TOR:TPP=15:1,5:1,5 | 50:50 | 7,5 |
| C | Glasfaser | – | – | – | 0,67 |
| 8 | Glasfaser | 59 | PPE 15 | 83:17 | 4,8 |
| 9 | Glasfaser | 59 | PPE:TOR:TPP=15:1,5:1,5 | 75:25 | 5,0 |

*) Die Zahlen geben an, wieviel % des jeweiligen Stoffes in der Lösung des Thermoplasten vorhanden sind, die zum Tränken benutzt wird.

## Patentansprüche

1. Bauteile aus mindestens zwei fest miteinander verbundenen Lagen A und B, bei denen die Lage A als Thermoplasten PPE oder ein PPE-haltiges Gemisch enthält und die Lage B aus Gummi besteht, wobei
   – die Lage A als Matrix PPE oder einen PPE-haltigen Thermoplasten und eine darin eingelagerten, ungeschnittenen, faserförmigen Festigkeitsträger enthält, der aus Kohlenstoff-, Aramid- und/oder Glasfasern besteht,

– die Lage B ein Gummi ist, der durch Vulkanisation eines Doppelbindungen enthaltenden Kautschukes erhalten wird und
– der Verbund durch Covulkanisation erzielt wird.

2. Verfahren zur Herstellung der Bauteile nach Anspruch 1, bei dem man die faserförmigen Festigkeitsträger allseitig mit PPE oder dem PPE-haltigen Thermoplasten umschließt und die so gewonnene Lage A zusammen mit dem Kautschuk ausvulkanisiert.

3. Verfahren nach Anspruch 2, wobei man die faserförmigen Festigkeitsträger mit einer Lösung des PPE oder des PPE-haltigen Thermoplasten tränkt, das Lösemittel entfernt und die so erhaltenen mit Thermoplasten beschichteten Festigkeitsträger gegebenenfalls mit weiterem thermoplastischen Material nach thermoplastischen Verarbeitungsmethoden ummantelt.

4. Verfahren nach Anspruch 2, wobei man die Festigkeitsträger in eine gestreckte parallele Lage bringt und gegebenenfalls in beliebiger Weise legt oder wickelt, bevor man das Lösemittel entfernt.

5. Verfahren nach Anspruch 4, wobei man während der Entfernung des Lösemittels die Lage A, gegebenenfalls unter Einwirkung von Druck, in die gewünschte Form bringt.

6. Verfahren nach den Ansprüchen 1 bis 5, wobei man als Doppelbindungen enthaltenden Kautschuk der Lage B einen Styrol-Butadien-Kautschuk verwendet.

## Claims

1. Structural elements comprising at least two firmly interbonded layers A and B, of which the layer A contains PPE or a PPE-containing mixture as thermoplastic and the layer B is composed of rubber,
– the layer A containing PPE or a PPE-containing thermoplastic as matrix and an unchopped, fibrous reinforcing filler which is incorporated in the said thermoplastic and is composed of carbon fibres, aramid fibres and/or glass fibres,
– the layer B being a rubber which is obtained by vulcanization of a crude rubber containing double bonds and
– the interbonded structure being achieved by covulcanization.

2. A method of producing the structural elements according to claim 1, in which the fibrous reinforcing fillers are surrounded on all sides with PPE or the PPE-containing thermoplastic and the layer A thus obtained is vulcanized to completion together with the crude rubber.

3. A method according to claim 2, in which the fibrous reinforcing fillers are impregnated with a solution of PPE or the PPE-containing thermoplastic, the solvent is removed and, if applicable, the thermoplastic-coated reinforcing fillers thus obtained are sheathed with further thermoplastic material by thermoplastic processing methods.

4. A method according to claim 2, in which the reinforcing fillers are brought into a stretched parallel orientation and, if applicable, laid or wound in any desired way before the solvent is removed.

5. A method according to claim 4, in which, during the removal of the solvent, the layer A is brought into the desired shape, if applicable under the effect of pressure.

6. A method according to any of claims 1 to 5, in which a styrene-butadiene rubber is used as the crude rubber containing double bonds of layer B.

## Revendications

1. Eléments de construction constitués d'au moins deux couches A et B fermement liées l'une à l'autre, dans lesquels la couche A renferme, comme thermoplaste, de l'éther polyphénylénique ou un mélange en renfermant et la couche B est constituée de caoutchouc,
– la couche A renfermant, comme matrice, de l'éther polyphénylénique ou un thermoplaste en renfermant et un support résistant inséré à l'intérieur de celle-ci, non coupé et se présentant sous forme de fibres, qui est constitué de fibres de carbone, de fibres d'aramide et/ou de fibres verre,
– la couche B étant un caoutchouc qui est obtenu par vulcanisation d'un caoutchouc renfermant des liaisons doubles et
– la liaison étant obtenue par co-vulcanisation.

2. Procédé pour la fabrication des éléments de construction selon la revendication 1, dans lequel les supports résistants se présentant sous forme de fibres sont enserrés de toutes parts avec de l'éther polyphénylénique ou avec le thermoplaste en renfermant et la couche A ainsi obtenue est vulcanisée complètement avec le caoutchouc.

3. Procédé selon la revendication 2, les supports résistants, se présentant sous forme de fibres, étant imprégnés avec une solution de l'éther polyphénylénique ou du thermoplaste en refermant, le solvant étant éliminé et les supports résistants ainsi obtenus, enduits avec les thermoplastes, étant éventuellement enrobés avec un autre matériau thermoplastique selon les méthodes de traitement thermoplastique.

4. Procédé selon la revendication 2, les supports résistants étant amenés en position parallèle allongée, et étant éventuellement placés de façon quelconque ou enroulés avant d'éliminer le solvant.

5. Procédé selon la revendication 4,

la couche A étant mise, pendant l'élimination du solvant, dans la forme souhaitée, en faisant éventuellement agir de la pression.

6. Procédé selon les revendications 1 à 5,

un caoutchouc au styrène-butadiène étant utilisé comme caoutchouc de la couche B renfermant des liaisons doubles.